Europäisches Patentamt

European Patent Office

Office européen des brevets

(19)

(11) **EP 1 538 426 B1**

(12) **EUROPÄISCHE PATENTSCHRIFT**

(45) Veröffentlichungstag und Bekanntmachung des Hinweises auf die Patenterteilung:
**16.08.2006 Patentblatt 2006/33**

(51) Int Cl.:
*G01F 9/00* (2006.01)          *G01F 9/02* (2006.01)
*G01M 17/007* (2006.01)          *G01M 15/00* (2006.01)

(21) Anmeldenummer: **03104496.9**

(22) Anmeldetag: **02.12.2003**

(54) **Verbesserung der Wiederholbarkeit bei Verbrauchsmessungen durch Normierung**

Improvement of repeatability of consumption measurements by normalisation

Amélioration de la répétabilité de mesures de consommation par normalisation

(84) Benannte Vertragsstaaten:
**DE FR GB**

(43) Veröffentlichungstag der Anmeldung:
**08.06.2005 Patentblatt 2005/23**

(60) Teilanmeldung:
**06113697.4**

(73) Patentinhaber: **Ford Global Technologies, LLC, A subsidary of Ford Motor Company Dearborn, MI 48126 (US)**

(72) Erfinder:
• **Will, Frank**
  **51467, Bergisch Gladbach (DE)**

• **Hoeren, Alexander**
  **42279, Wuppertal (DE)**
• **Klein, Christoph**
  **51063, Köln (DE)**

(74) Vertreter: **Drömer, Hans-Carsten et al Ford-Werke Aktiengesellschaft, Patentabteilung NH/DRP, Henry-Ford-Strasse 1 50725 Köln (DE)**

(56) Entgegenhaltungen:
**EP-A- 0 100 831          DE-A- 4 125 589
DE-C- 19 741 973**

**Beschreibung**

Die Erfindung betrifft ein Verfahren zur Bestimmung von Kraftstoffverbrauch und/oder der Abgasemissionen von Kraftfahrzeugen an einem Rollenprüfstand, der für Kraftstoffverbrauchs- und Abgasmessungen geeignet ist, wobei der Kraftstoffverbrauch und/oder die Abgasemissionen über eine vorgegebene Fahrkurve ermittelt werden, und wobei eine Abweichung von Ausgangsgrößen von zumindest einer Eingangsgröße abhängig ist.

Derartige Verfahren zur Bestimmung des Kraftstoffverbrauchs sind bekannt. Der jeweilige Kraftstoffverbrauch wird entweder aus einer Kohlenstoffbilanz der Abgaswerte berechnet, oder direkt mittels Kraftstoffmeßgeräten bestimmt. Den Messungen liegen dabei gesetzlich vorgeschriebenen Fahrzyklen zugrunde, welche die Fahrzeuge während des Testes auf den Rollenprüfständen nachfahren. Ein Fahrer des Fahrzeugs folgt dabei der vorgegebenen Fahrkurve, die sowohl die Geschwindigkeit, als auch bei manuellen Getrieben die Schaltpunkte vorgibt.

innerhalb enger Toleranzbänder sind Abweichungen der individuellen, realen Fahrkurven von der vorgegebenen Sollfahrkurve nahezu unvermeidbar. Diese Abweichung der tatsächlich gefahrenen Fahrkurve von der vorgegebenen Sollfahrkurve beeinflussen dabei stark die Genauigkeit und Wiederholbarkeit der Messungen.

Die zuvor genannten Abweichungen sind von Fahrer zu Fahrer und von Test zu Test völlig unterschiedlich. Ihr Einfluß auf die Ergebnisse der Kraftstoffverbrauchs- und Abgaswerte sind daher nur schwer abschätzbar. Zudem verlangen immer strengere Abgasvorschriften und sensiblere Entwicklungstests jedoch nach einer immer genaueren Messung der Emissionen und des Kraftstoffverbrauches.

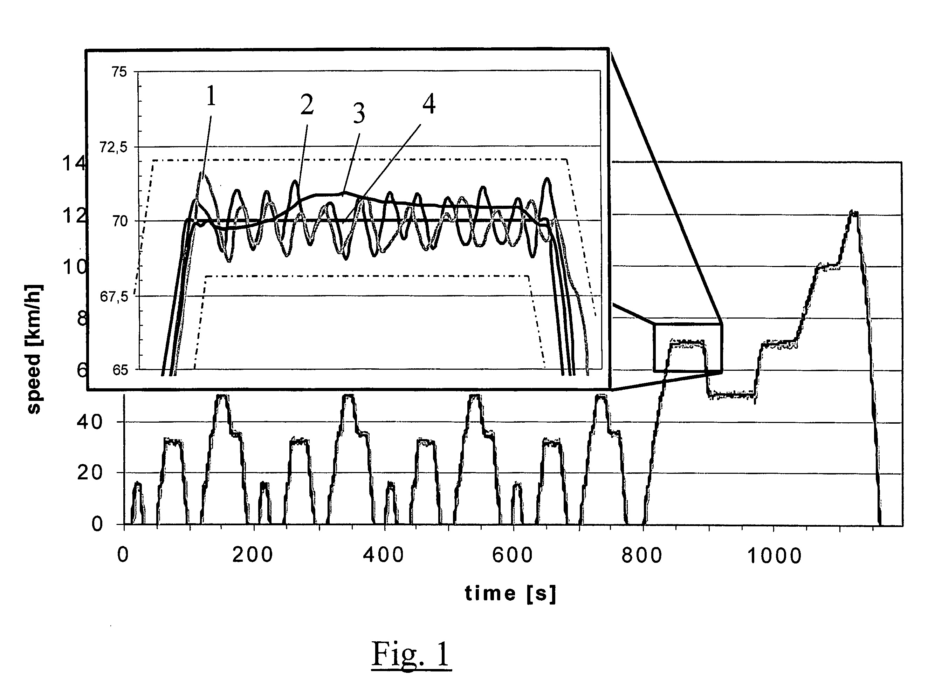

Ein beispielhafter Kraftstoffverbrauchstest wird auf dem Rollenprüfstand durchgeführt, und hat am Beispiel eines NEDC Fahrzyklus eine gesetzlich vorgegeben Dauer von 1180 Sekunden. Hierbei wird eine vom Gesetzgeber vorgegebene Sollfahrkurve im Rahmen zulässiger Toleranzen von einem Fahrer in einem realen Kraftfahrzeug auf dem Rollenprüfstand nachgefahren. Der während des Tests verbrauchte Kraftstoff wird mit üblichen Mitteln aufgenommen. Allerdings ist es für den Fahrer nicht möglich die Sollfahrkurve exakt nachzufahren. Dies stellt Figur 1 dar. In Figur 1 ist eine Geschwindigkeit des Kraftfahrzeugs über die Testdauer für drei nacheinander gefahrene Tests dargestellt (Kurve 1, 2 und 3). Alle drei realen Fahrkurven liegen innerhalb der gesetzlich erlaubten Abweichung (gestrichelte Linie). Allerdings sind starke Abweichungen zu der vorgegebenen Sollfahrkurve (Kurve 4) erkennbar.

Die US 5,372,035 betrifft einen Roboter zum Betreiben eines Kraftfahrzeugs auf einem Chassisdynamometer. Der Roboter weist einen Roboterkörper und ein Steuergerät, das eine Steuereinheit und eine Fahrereinheit beinhaltet, wobei das Steuergerät mit dem Roboterkörper verbunden ist. Der Roboter weist weiter Stellglieder auf, die ein Gaspedalstellglied zur Bedienung eines Gaspedals des Fahrzeugs, ein Zündschlüsselstellglied zur Bedienung eines Fahrzeugzündschlüssels und eine Hauptstromquelle, die mit der Fahrereinheit verbunden ist, beinhaltet. Der Roboter weist zudem eine Notstromquelle auf, die mit der Fahrereinheit und dem Gaspedalstellglied sowie dem Zündschlüsselstellglied verbunden ist, um ein Notbediensteuersignal zur Verfügung zu stellen, das das Gaspedal in eine neutrale Position mit dem Strom der Notstromquelle zurückstellt, wenn der Strom aus der Hauptstromquelle ausfällt. Zudem wird der Zündschlüssel gedreht, so daß ein Motor des Fahrzeugs ausgestellt wird, nachdem das Gaspedal in die neutrale Position zurückgestellt ist.

Hierbei wird ein Roboter zum Betreiben eines Kraftfahrzeugs offenbart, der in der Lage ist, den Motor des Kraftfahrzeugs auch im Fall eines unvorhergesehenen Störfalls, wie z. B. des Ausfalls der Spannungsversorgung oder aufgrund eines Betriebsfehlers sicher anzuhalten. Als Nachteil dieses Verfahrens ist der kapitalintensive Einsatz und aufwändige Einbau des Roboters zu nennen.

Der vorliegenden Erfindung liegt die Aufgabe zugrunde, ein verbessertes Verfahren zur Bestimmung des Kraftstoffverbrauches zur Verfügung zu stellen, bei dem eine durch Schwankungen verursachte Streuung der Verbrauchsergebnisse minimiert wird, wobei eine verbesserte Wiederholbarkeit der Messungen erreicht werden soll.

Erfindungsgemäß wird dies dadurch erreicht,

- daß Eing angsgrößen, die einen Einfluß auf den Kraftstoffverbrauch haben, wie der Kraftstoffverbrauch selber während des Tests aufgezeichnet werden,
- daß mit den aufgezeichneten Daten ein neuronales Netz trainiert wird, das nach einer Trainingsphase eine Ausgangsgröße in Abhängigkeit der Eingangsgrößen beschreibt,
- daß sodann eine normierte Fahrkurve und eine Drehzahlkurve vorgegeben wird, mit der das an einem realen Fahrzeug trainierte neuronale Netz die Ausgangsgröße simuliert,
- so daß die simulierte Ausgangsgröße der des realen Fahrzeugs entspricht, allerdings derart, als wäre das Fahrzeug der Sollfahrkurve exakt gefolgt.

Damit wird die zumindest eine Eingangsgröße, insbesondere die Fahrzeuggeschwindigkeit normiert, wodurch eine verbesserte Wiederholbarkeit von Kraftstoffverbrauchs- und Abgasmessungen durchführbar ist. Die Ausgangsgrößen sind bevorzugt der Kraftstoffverbrauch und/oder die Abgasemissionen (z.B. HC, $NO_x$, CO, $CO_2$). Hierbei wird der Fahrereinfluß mittels des künstlichen neuronalen Netzes eliminiert. Das neuronale Netz weist die Fähigkeit auf, aus gemessenen Daten nichtlineare Zusammenhänge in Form von mathematischen Modellen zu lernen. Nach der Trainingsphase wird die in den Daten enthaltene Information durch das neuronale Netz abgebildet. Trainiert man das neuronale Netz mit der realen Fahrkurve, so ist das Verhalten des Kraftfahrzeugs bezüglich Kraftstoffverbrauch, aber auch bezüglich von Emissionen abbildbar. Wird mit dem trainierten Netz ein erneuter Test simuliert, wobei als veränderte Eingangsgröße die normierte Fahrkurve vorgegeben wird, läßt sich aus der Differenz der beiden Ergebnisse der Fahrereinfluß abschätzen und berücksichtigen. Durch dieses verbesserte Verfahren wird die Genauigkeit und Wiederholbarkeit der Messungen verbessert, wobei gleichzeitig die Anzahl der Tests reduzierbar ist.

Das Verfahren ist im Sinne der Erfindung auf alle Tests anwendbar, bei denen streuende Testbedingungen, insbesondere von Randbedingungen und Eingangsgrößen einen signifikanten Einfluß auf das Ergebnis haben.

Weitere vorteilhafte Ausführungen des Verfahrens sind in den Unteransprüchen und der folgenden Beschreibung offenbart. Es zeigen:

Fig. 1 bis Fig. 13 Meßkurven.

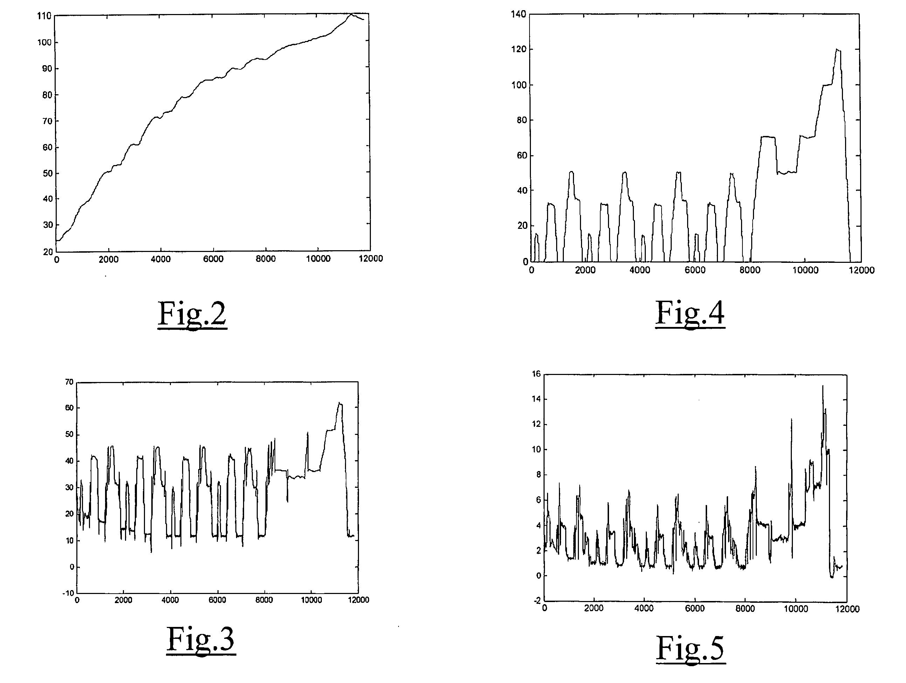

Figur 1 zeigt die Geschwindigkeitskurve eines herkömmlichen, beispielhaften Kraftstoffverbrauchstestes. Der Kraftstoffverbrauchstest wird auf einem Rollenprüfstand durchgeführt, der für Kraftstoffverbrauchs- und Abgasmessungen geeignet ist. Hierbei wird eine, vorzugsweise von einem Gesetzgeber vorgeschriebene Fahrkurve im Rahmen der zulässigen Toleranzen von einem Fahrer in einem realen Fahrzeug nachgefahren. Der beispielhafte Kraftstoffverbrauchstest hat eine Dauer von 1180 Sekunden. In den Figuren 2 bis 5 werden während der Dauer des Kraftstoffverbrauchstests von 1180 Sekunden unterschiedliche Eingangsgrößen gemessen und mit 10Hz, was 10 Messpunkten pro Sekunde entspricht aufgezeichnet. Beispielhafte Eingangsgrößen sind

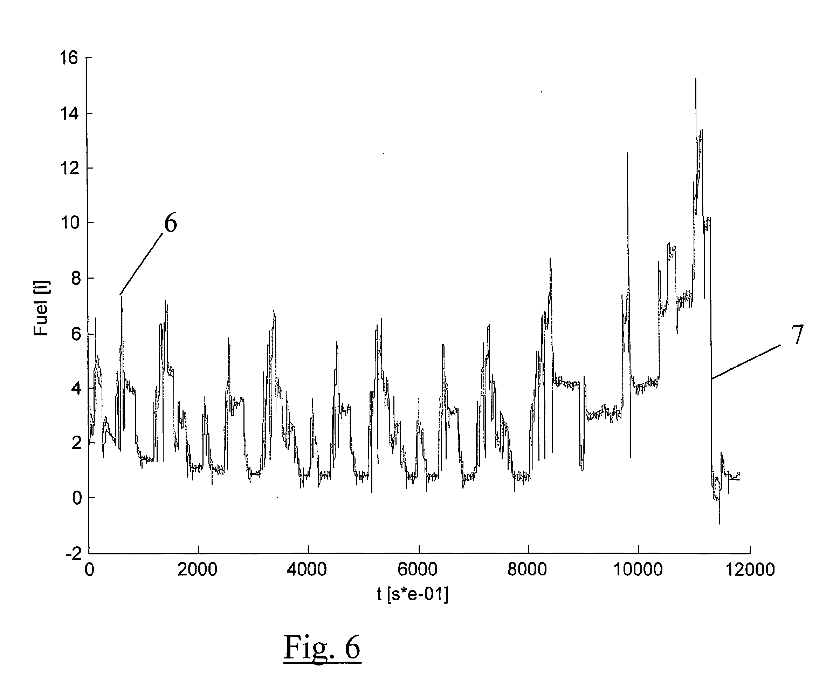

- die Motortemperatur (Figur 2)
- die Drehzahl (Figur 3)
- die Fahrzeuggeschwindigkeit (Figur 4),
- ein Kraftstoff-Luft-Verhältnis (nicht dargestellt),
- der Kraftstoffverbrauch selber (Figur 5).

Die Motortemperatur hat einen Einfluß auf den Kraftstoffverbrauch, denn je wärmer der Motor ist, desto geringer ist seine innere Reibung, so daß weniger Kraftstoff verbraucht wird. Je schneller ein Motor dreht, desto mehr Kraftstoff wird benötigt. Die Fahrzeuggeschwindigkeit und Ihre Änderung pro Zeiteinheit (Beschleunigung bzw. Verzögerung) sind zusammen mit der Drehzahl ein Maß für eine Last des Fahrzeugs. Je höher die Last ist, desto höher ist der Kraftstoffverbrauch. Wenn der Motor kalt ist, hat er eine höhere innere Reibung und es wird das Kraftstoff-Luft-Verhältnis erhöht, der Motor wird "fetter" gefahren, was ebenfalls den Kraftstoffverbrauch beeinflußt.

Mit den aufgezeichneten Daten wird ein neuronales Netz, insbesondere ein schnelles neuronales Netz auf eine Ausgangsgröße, vorzugsweise auf den Kraftstoffverbrauch hin trainiert. Figur 6 zeigt anhand der Kurve 6 den über die Testdauer aufgezeichneten Kraftstoffverbrauch. Der simulierte Kraftstoffverbrauch (Kurve 7) der Simulation ist dem realen (Kurve 6) überlagert. Dies bedeutet, daß dem neuronalen Netz zur Simulation die gleichen Eingangsgrößen gegeben wurden, mit dem es vorher trainiert wurde. Idealerweise sind beide Kurven 6 bzw. 7 bei einer optimalen Simulation absolut deckungsgleich. Erkennbar ist, daß mit den gewählten Meßgrößen eine sehr gute und ausreichend genaue Simulation erreichbar ist. Eine Differenz in diesem Ausführungsbeispiel zwischen gemessenem (10,0533l/ 100km) und simuliertem (10,0500l/100km) Kraftstoffverbrauch beträgt lediglich 0,032%.

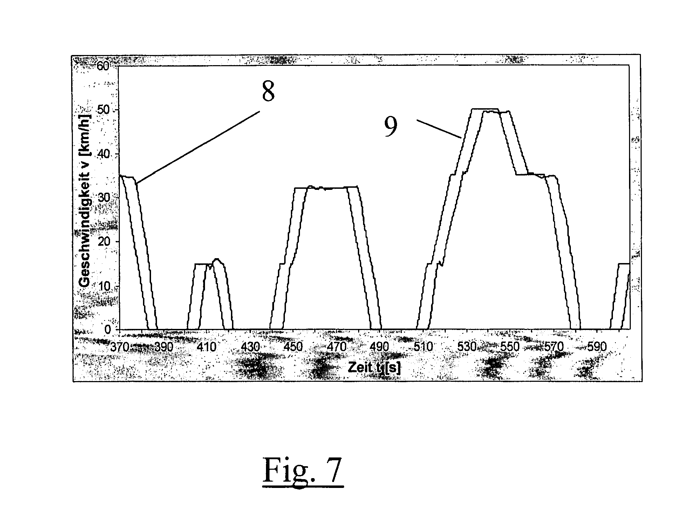

Nunmehr wird mit dem an einem realen Fahrzeug trainierten neuronalen Netz mit den normierten Eingangsgrößen eine Simulation vorgenommen. Hierzu werden vorzugsweise die Eingangsgrößen Geschwindigkeit und Drehzahl normiert. In Figur 7 ist sowohl die reale Fahrkurve (Kurve 8) als auch die Sollfahrkurve (Kurve 9) aufgezeichnet. Die Fahrkurve, also die Kurve der Fahrzeuggeschwindigkeit ist als normierte Eingangsgröße leicht vorgebbar. Zu beachten ist allerdings ein Zeitversatz zwischen den Kurven 8 bzw. 9. Dieser tritt dadurch auf, daß nicht jeder Test immer absolut zeitgleich nach dem Beginn der Datenaufzeichnungen gestartet wird. Vorteilhafterweise werden die beiden Kurven mittels eines Korrelationsverfahren zur Deckung gebracht. Hierbei wird die zeitliche Verschiebung korrigiert.

Das bevorzugte Korrelationsverfahren nähert eine mittlere Verschiebung auf indirektem Wege an. Hierbei wird vorrausgesetzt, daß die gesuchte Verschiebung gefunden ist, wenn nach einer Schrittweisen Rückverschiebung der Unterschied zwischen den beiden Geschwindigkeitsverläufen sein Minimum erreicht hat. Ein geeignetes Maß, diese Unterschiede bzw. Übereinstimmungen zu quantifizieren stellt ein empirischer Korrelationskoeffizient dar (Gleichung 1).

$$r = \frac{s_{realnorm}}{s_{real}s_{norm}} = \frac{\sum_{i=1}^{n}(v_{real,i} - \overline{v}_{real})(v_{rm,i} - \overline{v}_{rm})}{\sqrt{\sum_{i=1}^{n}(v_{real,i} - \overline{v}_{real})^2 \sum_{i=1}^{n}(v_{rm,i} - \overline{v}_{rm})^2}}$$

Gleichung 1

mit

$$\overline{v} = \frac{1}{n} \cdot \sum_{i=1}^{n} v_i$$

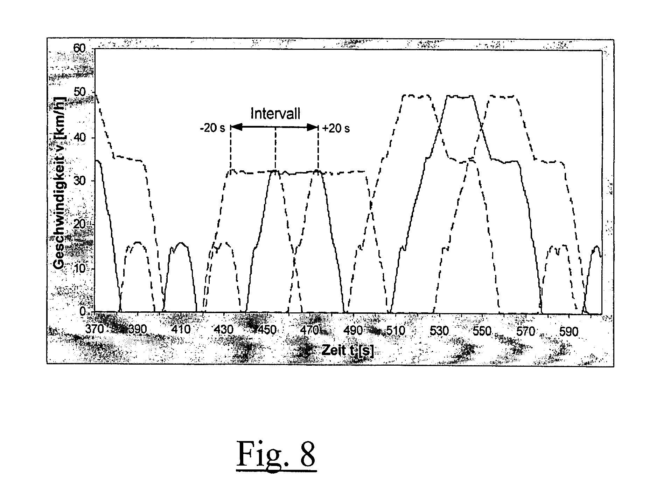

Figur 8 zeigt ein Verschiebungsintervall der realen Geschwindigkeit.

Mit der Annahme, daß die gesuchte Verschiebung einen bestimmten Grenzbetrag nicht überschreitet, wird der Datenkanal (=Eingangsgröße) der realen Geschwindigkeit innerhalb eines durch die Grenzwerte bestimmten Intervalls schrittweise verschoben. Der Grenzbetrag beträgt in dem bevorzugten Ausführungsbeispiel 20 Sekunden (Figur 8).

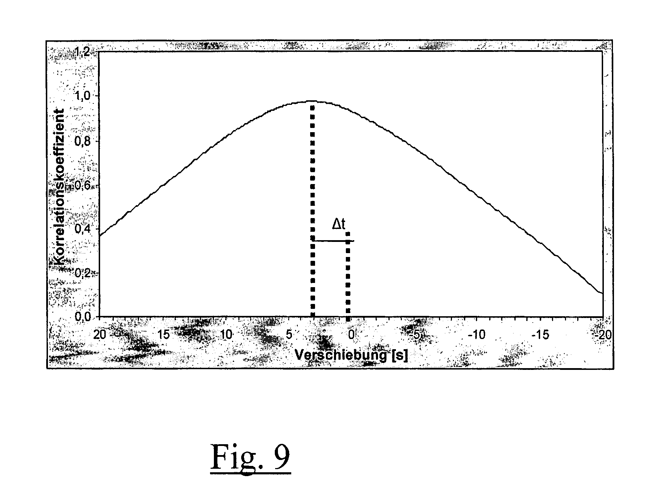

Zu jedem Schritt wird der Korrelationskoeffizient in einem zuvor festgelegten, hinreichend großen Teilbereich des Zyklus bestimmt. Damit ist aus dem sich ergebenen Verlauf, einer so genannten Kreuzkorrelationsfunktion, ein Maximum bestimmbar (Figur 9). Dieses Maximum identifiziert die Verschiebung, bei der die Abweichungen der einander zugeordneten Datenpunkte am geringsten ist. Dies bedeutet, daß bezüglich der Synchronisation ein Optimum gefunden ist. Der gesamte Meßwertdatensatz, dies sind alle gemessenen Datenkanäle, wird dauerhaft um den ermittelten zeitlichen Betrag in die entsprechende Richtung verschoben. Eventuell entstehende Datenlücken am Anfang bzw. Ende werden durch die jeweiligen Start- bzw. Endwerte aufgefüllt.

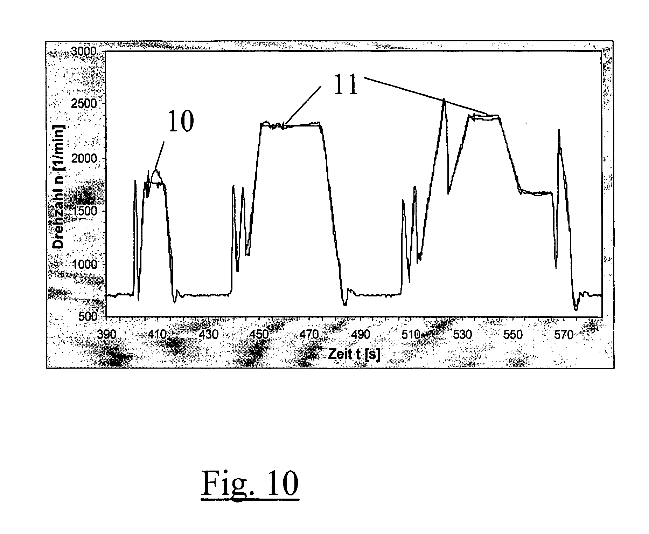

Figur 10 zeigt eine Normierung der Drehzahl. Eine reale Drehzahlkurve trägt das Bezugszeichen 10. Eine normierte Drehzahlkurve trägt das Bezugszeichen 11. Üblicherweise ist über den Übersetzungsverhältnissen des Getriebes die sich aus der Geschwindigkeit ergebende Motordrehzahl für jeden Fahrzeugtyp unterschiedlich. Von daher muß die normierte Drehzahl aus den Übersetzungsverhältnissen und der Geschwindigkeit hergeleitet werden.

In einem ersten Ansatz berechnet sich ein i-ter Datenpunkt nach Gleichung 2:

$$n_{norm,i} = \frac{n_{real,i}}{v_{real,i}} \cdot v_{rm,i}$$

Gleichung 2

Allerdings ist die Gleichung 2 nicht uneingeschränkt anwendbar. Diese ist nur in Bereichen definiert, in denen eingekuppelt ist, also z. B. nicht während Schaltvorgängen. Des weiteren darf die normierte Drehzahl bei Stillstand niemals auf Null absinken. Daher werden die Werte der realen Drehzahl an den betreffenden Stellen übernommen. Der Normierungseffekt wird dadurch zwar reduziert, allerdings wird auch eine Verfälschung der Zusammenhänge vermieden. Das Ergebnis der Berechnung ist in Figur 10 dargestellt. Ein ideal normierter Verlauf würde in den Abschnitten konstanten Übersetzungsverhältnisses, d. h. im eingekuppelten Zustand, wie die Sollfahrkurve geradlinig verlaufen. Obwohl Drehzahlschwankungen meist sichtbar geglättet werden, wird das Optimum nur an wenigen Stellen erreicht. Der Grund dafür liegt einerseits im Meßrauschen der einfließenden Größen. Zum anderen ist eine sichere Zuordnung der einzelnen Meßpunkte aufgrund des zeitlichen Toleranz-Bereichs nach wie vor nicht möglich. Insbesondere Anfahrvorgänge sowie ein Auskuppeln vor einer Leerlauf-Phase sind in diesem Zusammenhang als problematisch zu beurteilen. Hier ergeben sich ohne Korrektur durch große lokale Übersetzungsverhältnisse und zeitliche Verschiebungen unrealistische Drehzahl-Spitzen. Bis zu einer Geschwindigkeit von 5km/h wird daher ebenfalls die reale Drehzahl übernommen.

In weiteren zeitlich definierten Intervallen werden feste Übersetzungsverhältnisse verwendet. Dabei berechnet sich die normierte Drehzahl in eingekuppelten Bereichen nach Gleichung 3. Das Übersetzungsverhältnis ü ist darin noch von einer eingelegte Gangstufe abhängig, welche ihrerseits durch die Stelle i identifiziert wird.

$$n_{norm,i} = \ddot{u}_i(n) \cdot v_{rm,i}$$

Gleichung 3

Für die einzelnen Übersetzungsverhältnisse der Gangstufen werden zuvor gemittelte Werte auf Grundlage der Meßdaten berechnet. Auf diese Weise wird der Einfluß des Meßrauschens weitestgehend neutralisiert. Durch die datenbasierte Ermittlung der Übersetzungsverhältnisse ist darüber hinaus eine universelle Verwendung des Algorithmus weiterhin möglich, ohne zusätzliche Parameter, die auf Getriebedaten beruhen, berücksichtigen zu müssen.

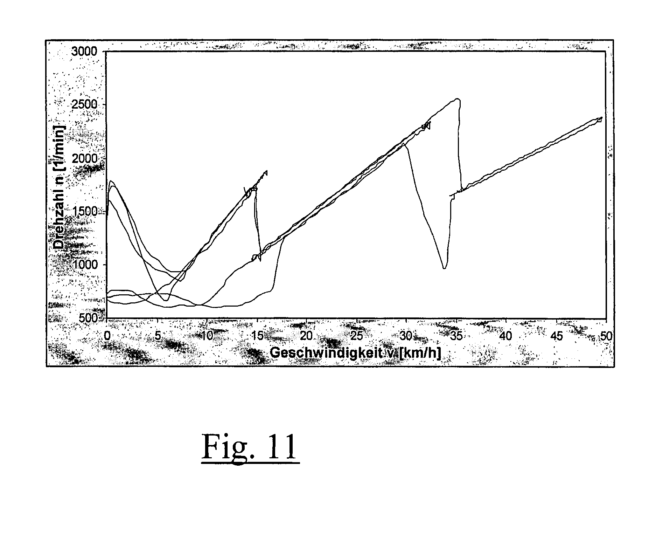

Figur 11 trägt die Drehzahl über der Geschwindigkeit auf, wodurch sich die Streuung für Bereiche, die mehrfach durchfahren werden, einfach erkennen läßt. Dabei muß berücksichtigen werden, daß sowohl Beschleunigungs- als auch VerzögerungsPhasen erfaßt sind, die sich unterschiedlich auf den Verlauf auswirken. Es ist erkennbar, daß insbesondere die Anfahrvorgänge deutlich von einander abweichen. Diese Abweichungen sind beim Vergleich von mehreren Tests mit unterschiedlichen Fahrern oft noch wesentlich stärker ausgeprägt. Vor dem Hintergrund der Normierung ist es also sinnvoll, für diese Bereiche einen einheitlichen Verlauf zu erzeugen. Deshalb wird ein vergleichbar einfaches Vorgehen festgelegt, wonach die Drehzahl bis zum völlig eingekuppelten Zustand konstant bleibt.

In Bereichen der Gangwechsel ist es erforderlich, die Drehzahl unverändert zu lassen. Zwar ist auch an diesen Stellen eine fahrerseitige Streuung zu erwarten, jedoch kann diese deutlich von konfigurations-spezifischen Einflüssen überlagert sein. Insbesondere das Abfallen der Drehzahl nach dem Auskuppeln sowie das Hochdrehen des Motors nach dem Herunterschalten sind stark fahrzeugabhängig. Auf einen künstlichen Verlauf wird in diesen Bereichen verzichtet, damit die fahrzeugseitigen Einflüsse nicht verloren gehen. Aus dem gleichen Grund werden auch die realen Leerlauf-Phasen beibehalten.

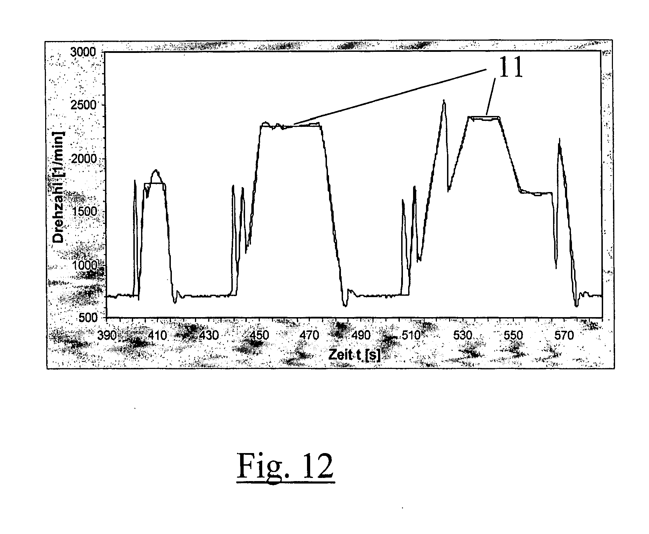

Die in Figur 12 dargestellte normierte Drehzahl weist die beschriebenen Eigenschaften auf. Außerdem verläuft sie in den eingekuppelten Bereichen geradlinig. Dies stellt das Optimum dar.

Das Ergebnis dieser Simulation entspricht dem des realen Fahrzeugs, welches absolut genau der Sollfahrkurve gefolgt ist. Hierdurch wird der Fahrereinfluß nahezu vollständig eliminiert.

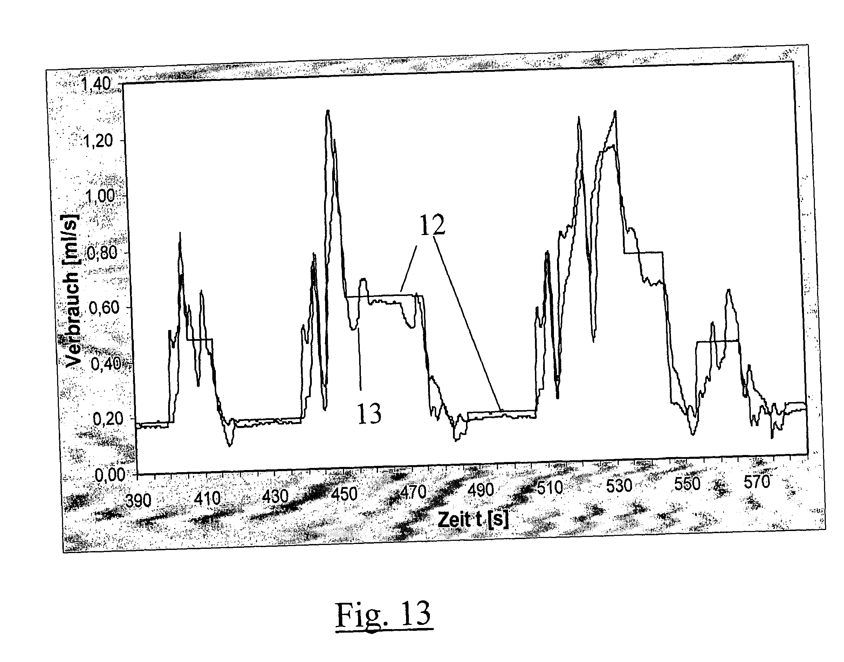

In Figur 13 ist das Ergebnis der Simulation dargestellt. Der mit den normierten Meßgrößen Geschwindigkeit und Drehzahl simulierte Kraftstoffverbrauch (Kurve 12) ist dem realen Kraftstoffverbrauch (Kurve 13) überlagert. Erkennbar ist, wie der durch den Fahrer verursachte unregelmäßige Kraftstoffverbrauch geglättet ist. Mittels dieser vorteilhaften Eliminierung des Fahrereinflusses wird eine verbesserte Wiederholbarkeit der Kraftstoffverbrauchsmessungen erreicht, ohne daß die reale Fahrzeugverbrauchscharakteristik verfälscht wird.

## Patentansprüche

1. Verfahren zur Bestimmung des Kraftstoffverbrauchs und/oder der Abgasemissionen von Kraftfahrzeugen an einem Rollenprüfstand, der für Kraftstoffverbrauchs- und Abgasmessungen geeignet ist, wobei der Kraftstoffverbrauch und/oder die Abgasemissionen über eine vorgegebene Fahrkurve ermittelt werden, und wobei eine Abweichung von Ausgangsgrößen von zumindest einer Eingangsgröße abhängig ist.
   **dadurch gekennzeichnet,**

   o **daß** Eingangsgrößen, die einen Einfluß auf den Kraftstoffverbrauch haben, wie der Kraftstoffverbrauch selber während des Tests aufgezeichnet werden,
   o **daß** mit den aufgezeichneten Daten ein neuronales Netz trainiert wird, das nach einer Trainingsphase eine Ausgangsgröße in Abhängigkeit der Eingangsgröße beschreibt,
   o **daß** sodann eine normierte Sollfahrkurve und/oder eine Drehzahlkurve vorgegeben wird, mit der das an einem realen Fahrzeug trainierte neuronale Netz die Ausgangsgröße simuliert,
   o so **daß** die simulierte Ausgangsgröße der des realen Fahrzeugs entspricht, allerdings derart, als wäre das Fahrzeug der Sollfahrkurve exakt gefolgt.

2. Verfahren nach Anspruch 1,
   **dadurch gekennzeichnet, daß**
   die Eingangsgröße vorzugsweise eine Motortemperatur und/oder die Drehzahl und/oder die Fahrzeuggeschwindigkeit und/oder ein Kraftstoff-Luft-Verhältnis und/oder der Kraftstoffverbrauch selber ist.

3. Verfahren nach einem der vorhergehenden Ansprüche,
   **dadurch gekennzeichnet, daß**
   die Eingangsgrößen Geschwindigkeit und/oder Drehzahl normiert werden.

4. Verfahren nach einem der vorhergehenden Ansprüche,
   **dadurch gekennzeichnet, daß**
   die Eingangsgröße Drehzahl in der Art normiert wird, daß in definierten zeitlichen Intervallen feste Übersetzungsverhältnisse verwendet werden.

**5.** Verfahren nach einem der vorhergehenden Ansprüche,
**dadurch gekennzeichnet, daß**
die Ausgangsgröße ein Kraftstoffverbrauch ist.

**6.** Verfahren nach einem der vorhergehenden Ansprüche,
**dadurch gekennzeichnet, daß**
die Ausgangsgröße Abgasemissionen sind.

**7.** Verfahren nach einem der vorhergehenden Ansprüche,
**dadurch gekennzeichnet, daß**
die zumindest eine Eingangsgröße die Fahrzeuggeschwindigkeit ist.

**Claims**

**1.** Method for determining the fuel consumption and/or the exhaust gas emissions of motor vehicles on a roller test stand which is suitable for measuring fuel consumption and exhaust gas, the fuel consumption and/or the exhaust gas emissions being determined by means of a predetermined driving curve and a deviation of output variables being dependent on at least one input variable, **characterized**

o **in that** input variables which have an influence on the fuel consumption, are recorded during the test as is the fuel consumption itself,
o **in that** a neural network which describes an output variable as a function of the input variable after a training phase is trained with the recorded data,
o **in that** a standardized setpoint driving curve and/or a rotational speed curve, with which the neural network which is trained on a real vehicle simulates the output variable, is then predefined,
o so **that** the simulated output variable corresponds to that of the real vehicle but in such a way as if the vehicle were following the setpoint travel curve precisely.

**2.** Method according to Claim 1, **characterized in that** the input variable is preferably an engine temperature and/or the rotational speed and/or the velocity of the vehicle and/or a fuel/air ratio and/or the fuel consumption itself.

**3.** Method according to one of the preceding claims, **characterized in that** the velocity and/or rotational speed input variables are standardized.

**4.** Method according to one of the preceding claims, **characterized in that** the rotational speed input variable is standardized in such a way that fixed transmission ratios are used at defined time intervals.

**5.** Method according to one of the preceding claims, **characterized in that** the output variable is a fuel consumption.

**6.** Method according to one of the preceding claims, **characterized in that** the output variable is exhaust gas emissions.

**7.** Method according to one of the preceding claims, **characterized in that** the at least one input variable is the velocity of the vehicle.

**Revendications**

**1.** Procédé pour déterminer la consommation de carburant et/ou les émissions de gaz d'échappement de véhicules automobiles sur un banc d'essai de roulement qui est conçu pour les mesures de la consommation de carburant et des gaz d'échappement, la consommation de carburant et/ou les émissions de gaz d'échappement étant déterminées par le biais d'une courbe de déplacement prédéfinie et un écart par rapport aux grandeurs initiales dépendant au moins d'une grandeur d'entrée, **caractérisé en ce**

* **que** les grandeurs d'entrée qui ont une influence sur la consommation de carburant ainsi que la consommation de carburant elle-même sont enregistrées pendant le test,
* **que** les données enregistrées servent à l'apprentissage d'un réseau neuronal qui, après une phase d'apprentissage, décrit une grandeur de sortie en fonction de la grandeur d'entrée,

\* **qu'**une courbe de déplacement de consigne et/ou une courbe de vitesse de rotation normalisée est ainsi prédéfinie, avec laquelle le réseau neuronal ayant suivi un apprentissage sur un véhicule réel simule la grandeur de sortie,

\* de sorte **que** la grandeur de sortie simulée corresponde à celle du véhicule réel, tout au moins comme si le véhicule suivant exactement la courbe de déplacement de consigne.

2. Procédé selon la revendication 1, **caractérisé en ce que** la grandeur d'entrée est de préférence une température du moteur et/ou la vitesse de rotation et/ou la vitesse du véhicule et/ou un rapport carburant/air et/ou la consommation de carburant elle-même.

3. Procédé selon l'une des revendications précédentes, **caractérisé en ce que** les grandeurs d'entrée vitesse et/ou vitesse de rotation sont normalisées.

4. Procédé selon l'une des revendications précédentes, **caractérisé en ce que** la grandeur d'entrée vitesse de rotation est normalisée de telle sorte que des rapports de démultiplication fixes sont utilisés à intervalles temporels donnés.

5. Procédé selon l'une des revendications précédentes, **caractérisé en ce que** la grandeur de sortie est une consommation de carburant.

6. Procédé selon l'une des revendications précédentes, **caractérisé en ce que** la grandeur de sortie est l'émission de gaz d'échappement.

7. Procédé selon l'une des revendications précédentes, **caractérisé en ce que** l'au moins une grandeur d'entrée est la vitesse du véhicule.

Fig. 1

Fig.2

Fig.4

Fig.3

Fig.5

EP 1 538 426 B1

Fig. 6

Fig. 7

Fig. 8

EP 1 538 426 B1

Fig. 9

Fig. 10

EP 1 538 426 B1

Fig. 11

15

Fig. 12

EP 1 538 426 B1

Fig. 13